# EUROPÄISCHE PATENTSCHRIFT

(11) **EP 1 168 829 B1**
(45) Veröffentlichungstag und Bekanntmachung des Hinweises auf die Patenterteilung: **24.01.2007**
(21) Anmeldenummer: 01115457.2
(22) Anmeldetag: 27.06.2001
(51) Int. Cl.: H04N 5/222

(54) **Verfahren zur Durchführung von Livesendungen mit Bildeinspielung**
Method for carrying out live broadcasts with image insertions
Méthode de réalisation d'émissions en direct avec insertion d'images

(30) Priorität: 27.06.2000 DE 10030295; 20.11.2000 DE 10057544
(43) Veröffentlichungstag der Anmeldung: 02.01.2002
(73) Patentinhaber: Bunte Toni, 53819 Neunkirchen-Seelscheid (DE)
(72) Erfinder: Bunte Toni, 53819 Neunkirchen-Seelscheid (DE)
(74) Vertreter: Neumann, Ernst Dieter

(56) Entgegenhaltungen:
- WO-A-99/12349
- US-A- 5 679 077
- US-A- 5 806 005
- 'i2tv - interaktives Internet-Fernsehen' BERICHT DER GMD-BONN, [Online] 2000, Seiten 1 - 3, XP002993538 Gefunden im Internet: <URL:http://www.iskp.uni-bonn.de/bibliothek /reports/GMD/2000/d-probl/i2tv.pdf>
- '100 heisse nächte aus Hannover' NBC EUROPE PRESSEINFORMATION, [Online] 14 September 2000, Seite 1, XP002993539 Gefunden im Internet: <URL:http://www.giga.de/imp/pdf/PM00_09_14_ 100xheartbeat.pdf>
- 'NBC GIGA - The Future is You' NBC EUROPE PRESSEINFORMARTION, [Online] 26 Januar 1998, Seiten 1 - 2, XP002993540 Gefunden im Internet: <URL:http://www.giga.de/imp/pdf/PM98-11-26_ giga%startet.pdf>

## Beschreibung

Die Erfindung betrifft eine Einrichtung und ein Verfahren zur Durchführung von Live-Fernsehsendungen, insbesondere solchen, die unter Leitung eines Moderators stehen und die ein am Aufnahmeort anwesendes Vor-Ort-Publikum einschließen. In derartigen Sendungen, die sowohl rein unterhaltenden als auch rein informativen Charakter haben können oder in der Regel beiden Kriterien unterfallen, ist es bereits heute üblich, während der Live-Sendung Interviews mit nicht am Aufnahmeort befindlichen Personen durchzuführen und diese in die laufende Fernsehübertragung einzuspielen. Hierbei kann es sich um reine Telefoninterviews handeln oder um Interviews, die von einem professionellen Aufnahmeteam mit zuvor ausgesuchten und instruierten Personen durchgeführt werden. Telefoninterviews bieten die Möglichkeit einer spontanen Auswahl der interviewten Personen, sei es nach Auswahl des durchführenden Fernsehsenders, sei es auf eigenen Anruf der zur Meinungsäußerung entschlossenen Personen aus dem Bildschirmpublikum. Telefoninterviews sind dem Medium Fernsehen deutlich unangemessen. Bildschirminterviews, die von Aufnahmeteams des durchführenden Fernsehsenders veranstaltet werden, sind wenn nicht auf vorherbestimmte Personen, so doch zumindest auf einige vorbereitete Aufnahmeorte begrenzt.

Aus der WO 99/12349 ist ein System bekannt, bei dem eine Mehrzahl von Benutzern, de über ein "user terminal" verfügen, über ein Datenübertragungsnetzwerk, insbesondere das Internet, auf eine "web site" zugreifen kann, auf der Bildmaterial unterschiedlichen Ursprungs zur Verfügung steht. Die Benutzer können hierbei aktiven Einfluß auf die Bilderauswahl nehmen, insbesondere vor Ort befindliche Kameras, die das Bildmaterial liefern, hinsichtlich des Bildausschnitts steuern.

Aus der US 5,679,077 ist ein computergesteuertes Bingospielsystem bekannt, bei welchem ein Zentralcomputer ("managing computer system") Spielzahlen nach dem Zufallsprinzip auswählt und mit den Zahlen der virtuellen Spielkarten von entfernt befindlichen Spielern vergleicht. Diese können zuvor ihre Spielkartendaten und ihre persönlichen Daten über ein Kommunikationssystem wie interaktives Fernsehen in den Zentralcomputer eingeben und die Spielergebnisse über das Fernsehen verfolgen.

Die US 5,806,005 betrifft ein System für die Bildspeicherung für Digitalkameras, bei welchem Bilddaten über ein Funkzellennetz (cellular network) auf einen Zentralcomputer übertragen und dort weiterverarbeitet werden, um Speicherkapazität in der Digitalkamera freizusetzen.

Aus der WO/00229 ist ein System bekannt, bei dem Verkaufs- oder Auktionsveranstaltungen mit einer elektronischen Kamera aufgenommen und über einen Fernsehsender live übertagen werden. Die Warenangebote werden am Aufnahmeort, d.h. im Studio auf einem Bildschirm angezeigt, der zusammen mit einem Auktionator in der Fernsehsendung übertragen wird. Hierbei werden von einzelnen Zuschauern Geldgebote mit anderen Übertragungsmitteln, insbesondere über Mobiltelefone und entsprechende Funkzellennetze oder mittels Internetterminals über das Internet auf einen Zentralcomputer ("Auction Management System") übertragen. Von diesem Zentralcomputer werden die Geldgebote verwaltet und der vorstehend genannte Bildschirm im Studio gesteuert, der die Warenangebote mit den eingegebenen Geldgeboten in Kombination erkennen läßt.

Die Publikation des MARS, Fraunhofer Institut für Medientechnik; J. Novak et al:
"i2TV: Experiments in New Formats for Connected Communities", Conference abstracts and applications, Karlstad, Schweden, April 2000, Seite 213, offenbart unter dem bezeichnenden Titel "Experiments in New Formats for Connected Communities" am Beispiel einer Internet-Fernsehübertragung eines Bühnenstücks oder dergleichen die Möglichkeit der Einspielung von Live-Kommentaren durch einzelne Fachpersonen über Internetstrukturen.

Hiervon ausgehend liegt der vorliegenden Erfindung die Aufgabe zugrunde, ein System und eine Durchführungsform für Live-Fernsehsendungen bereitzustellen, die die Darstellungsform von Live-Übertragungen mit Publikumskontakt verbessert und die Auswahlmöglichkeit unter den zu Meinungsäußerungen entschlossenen Personen aus dem Bildschirmpublikum erweitert.

Die Lösung hierfür besteht in einer Einrichtung zur Durchführung von Live-Fernsehsendungen - insbesondere solchen, die unter Leitung eines Moderators stehen und die ein Vor-Ort-Publikum einschließen - bei der an einem Aufnahmeort elektronische Aufnahmemittel zur Erzeugung von Bild- und Tonaufnahmen von Live-Ereignissen eingerichtet sind, die mit einem Fernseh-Sender verbunden sind der über Mittel zur Durchführung einer Live-Fernsehsendung für ein Bildschirmpublikum verfügt, wobei die am Aufnahmeort von den Aufnahmemitteln erzeugten Aufnahmen zumindest teilweise den Inhalt der Übertragung einer Live-Fernsehsendung bilden, wobei an weiteren Standorten weitere elektronische Aufnahmemittel zur Erzeugung von Bild- und Tonaufnahmen aufgestellt sind, und als weitere elektronische Aufnahmemittel Mobiltelefone mit digitaler Kamera vorgesehen sind, die über Internetstrukturen mit einem Rechner/Speicher im Sender verbunden sind und
Bildauswahl- und -einspielmittel vorgesehen sind, mit denen die an den weiteren Standorten von den weiteren Aufnahmemitteln erzeugten Aufnahmen in den Ablauf der unter Verwendung der von den Aufnahmemitteln am Aufnahmeort erzeugten Aufnahmen erfolgenden Übertragung der Live-Fernsehsendung einspielbar sind, und die Mobiltelefone zur Herstellung von interaktiven Sprechverbindungen zwischen dem Aufnahmeort und den weiteren Standorten über die Internetstrukturen vorgesehen sind.

Die Lösung besteht weiterhin im Verfahren zur Durchführung von Live-Fernsehsendungen - insbesondere solchen, die unter Leitung eines Moderators stehen und die ein an einem Aufnahmeort anwesendes Vor-Ort-Publikum einschließen - bei dem an einem eingerichteten Aufnahmeort Bild- und Tonaufnahmen von Live-Ereignissen mit elektronischen Aufnahmemitteln aufgenommen werden, die zu einem Fernseh-Sender übertragen werden, der über Mittel zur Durchführung einer Live-Fernsehsendung für ein Bildschirmpublikum verfügt, und zumindest teilweise den Inhalt der Übertragung der Live-Fernsehsendung bilden und während des Aufnehmens der Live-Ereignisse am Aufnahmeort an weiteren Standorten digitale Live-Bild- und Tonaufnahmen mit weiteren elektronischen Aufnahmemitteln erzeugt werden, und
die weiteren digitalen Live-Bild- und Tonaufnahmen mittels Mobiltelefonen mit digitaler Kamera
über Internetstrukturen zu dem Sender übertragen und in den Ablauf der Übertragung (Live-Streaming) der Live-Fernsehsendung eingespielt werden, und zwischen dem Aufnahmeort und den weiteren Standorten interaktive Sprechverbindungen mittels der Mobiltelefone über die Internetstrukturen hergestellt werden.

Das zunehmende Bestreben von Teilen des Publikums, sich im Fernsehen zu produzieren, wird hiermit auf die Basis des Internets gestellt, wodurch dieser Vorgang für jeden Internet-User nunmehr spontan und aus einer gewohnten Umgebung heraus möglich wird.

Hierbei können die Bildauswahl- und -einspielmittel Eingabemittel umfassen, die von einem Benutzer/Regisseur steuerbar sind, wodurch die Sendungsabläufe weitgehend kontrolliert werden können. Es ist jedoch auch möglich, daß die Bildauswahl- und -einspielmittel einen Zufallsgenerator umfassen, der zur Auswahl aus den von einer Vielzahl von weiteren Aufnahmemitteln bereitgestellten Aufnahmen dient. Dies ist insbesondere dann möglich, wenn mit dem Einspielen in die laufende Fernsehsendung ein Spielgewinn oder die Chance auf einen Spielgewinn verbunden ist.

Die weiteren Aufnahmemittel sind vorzugsweise mit einem multimediafähigen und internetfähigen Computer verbunden, der in die Internetstrukturen integriert ist.

In weiterer Ausgestaltung ist vorzusehen, daß nicht nur eine unidirektionale Einspielung von Bild- und Tonaufnahmen in die laufende Live-Fernsehsendung erfolgt, sondern daß Mittel zur Herstellung von interaktiven Sprechverbindungen zwischen dem Aufnahmeort und den weiteren Standorten über die Internetstrukturen vorgesehen sind. Die weiteren Aufnahmemittel, können in üblicher Weise mit einem Server eines Providers innerhalb der Internetstrukturen verbunden sein. Entsprechend ist ein Server auf der Senderseite vorzusehen, an den eine Mehrzahl von Monitoren angeschlossen ist, auf denen zumindest eine Auswahl der an den weiteren Standorten erzeugten Aufnahmen wiedergegehen werden kann.

Im Sender können Datenspeichermittel und -wiedergabemittel für Bild- und Tonaufzeichnung vorgesehen sei, die mit entsprechenden Bildauswahl- und -einspielmitteln funktionell verbunden sind, um gespeicherte Bild- und Tonaufzeichnungen in die Live-Fernsehsendung einzuspielen. Mit Ausnahme dieser hier als Aufzeichnungen bezeichneten Bestandteile ist im übrigen, wenn von Aufnahme und Sendung gesprochen wird, immer die Direktübertragung/Live-Streaming gemeint und zu verstehen.

In weiterer Ausgestaltung kann auf einem Provider innerhalb der Internetstrukturen eine Website des Senders eingerichtet sein, auf der der Ablauf der Live-Fernsehsendung darstellbar ist. Hiermit kann, gegebenenfalls in Split-Screen-Technik über das gleiche Endgerät sowohl die Live-Fernsehsendung verfolgt werden als auch gegebenenfalls interaktive Kommunikation mit dem Sender aufrechterhalten werden. Hierbei kann insbesondere vorgesehen sein, daß eine Website des Senders eingerichtet ist, die zur Durchführung von Abstimmungsvorgängen/Meinungsäußerungen/Wettaussagen seitens der teilnehmenden Personen eingerichtet ist, deren Einzel- und/oder Gesamtergebnisse unmittelbar in die Übertragung der Live-Fernsehsendung einspielbar sind.

Unter bestimmten Umständen kann bei der Durchführung solcher Abstimmungen vorgesehen sein, daß die abstimmenden Personen durch eine vorher vergebenen PIN-Nummer identifiziert sind, die nach der Stimmabgabe soweit gelöscht wird, als das Abstimmungsergebnis nicht mehr der PIN-Nummer zuzuordnen ist. Ein derartiges Verfahren kann vorgesehen sein, wenn z. B. eine Abstimmung auf eine bestimmte repräsentative Personengruppe beschränkt werden soll.

Nach einer anderen Verfahrensdurchführung kann vorgesehen sei, daß die abstimmenden, ihre Meinung äußernden oder an einer Wette teilnehmenden Personen insbesondere anhand ihrer Internetadresse identifiziert und registriert werden und ihre Daten nach der Stimmabgabe, Meinungsäußerung oder Wettaussage gespeichert werden. Dies ist insbesondere dann sinnvoll , wenn mit der Teilnahme an den entsprechenden Prozeduren ein Gewinn oder eine Gewinnchance verbunden ist.

Soweit bisher von diesen Abstimmungen und dergleichen die Rede war, können diese Vorgänge von Bild- und Toneinspielungen entkoppelt vorgenommen werden. In günstiger Abwandlung ist es hier auch möglich, daß Einzelperson und/oder Personengruppen von Abstimmenden, Meinungsäußernden oder Wettern während der Live-Fernsehsendung mit den weiteren Aufnahmemitteln aufgenommen und die Aufnahmen über das Internet übertragen und in die Live-Fernsehsendung eingespielt werden.

Nach einer günstigen Verfahrensdurchführung kann vorgesehen sein, daß während der Live-Fernsehübertragung der Zählstand der laufenden Abstimmung, Meinungsäußerung oder der Wette mit seinen Änderungen in der laufenden Live-Fernsehsendung im Bild digital mit alphanumerischen Zeichen oder analog in Diagrammen dargestellt wird.

Das erfindungsgemäße System sieht vor, daß Personen aus dem Bildschirmpublikum Live-Camcorderaufnahmen oder Aktuellzeit-Digitalbildaufnahmen zum Fernsehsender übertragen, die in die Übertragung der Live-Fernsehsendung eingespielt werden. Als Übertragungsweg für derartige Live-Aufnahmen/Standbilder steht das Internet zur Verfügung, wobei die Bilder eines Camcorders bzw. einer Digitalbildkamera auf einen internetfähigen PC/Laptop/Notebook und von diesem aus über das world wide web zum Sender übertragen werden. Hiermit können beliebige Personen aus dem Bildschirmpublikum, den Besitz einer entsprechenden Kamera und eines internetfähigen/multimediafähigen PCs/Laptops/Notebooks vorausgesetzt, in die Live-Fernsehsendungen eingespielt werden, während sie zugleich ihre Statements abgeben oder mit dem Moderator der Live-Fernsehsendung dabei kommunizieren. Das Einwählen bei dem die Live-Fernsehsendung durchführenden Fernsehsender kann durch Bereitstellen einer entsprechenden Website/Homepage durch den Fernsehsender, über welche die Verbindungsherstellung mittels Mausclicks erfolgen kann, erleichtert werden. Ein die Sendung leitender Regisseur kann unter den in den Webserver des Sender bereits eingelinkten Personen ein Casting/eine Auswahl durchführen, so daß nur für die Sendung ausgewählte Personen in die Live-Fernsehsendung eingespielt werden. Alternativ kann auch eine von subjektiven Kriterien unbeeinflußte Auswahl per Zufallsgenerator getroffen werden.

Das von der Person aus dem Bildschirmpublikum zur Verfügung gestellte Kamerabild oder Standbild kann unmittelbar in die Live-Fernesehsendung geschnitten werden, oder auf einen Bildschirm übertragen werden, der mit einem Vor-Ort-Publikum / Studiopublikum zusammen aufgenommen wird und für die Live-Fernsehsendung verwendet wird. Die Einspielung kann Einzelpersonen oder Personengruppen betreffen, wobei bevorzugt eine interaktive Sprechverbindung zwischen der die Aufnahme erzeugenden Person und/oder den in der Aufnahme dargestellten Personen mit dem Moderator der Sendung oder einem Teil des Vor-Ort-Publikums/ Studiopublikums hergestellt wird.

Während im vorstehenden von Personendarstellung und Meinungsäußerung von Personen die Rede ist, ist es nicht ausgeschlossen, daß auf dem angegebenen Übertragungsweg reine Bildbeiträge mit der Darstellung von Naturereignissen, der Darstellung von Verkehrssituationen, der Darstellung von Sportereignissen aus den unterschiedlichsten Blickwinkeln und dergleichen geliefert werden und in der angegebenen Weise in Live-Fernsehsendungen eingebracht werden.

Von unterschiedlichster Form und von unterschiedlichstem Inhalt können auch die Sendungen selber sein, vorrangig sind solche Sendungen von Interesse, in denen das Bildschirmpublikum eine Wahl zwischen oder Auswahl unter verschiedenen Künstlern oder Musiktiteln vornimmt oder eine Voraussage für ein bevorstehendes Ereignis (Wette) als Gesamtheit tätigt. Hierbei kann die entsprechende Aussage des per Internetverbindung mit Bildübermittlung angeschlossenen Teils des Bildschirmpublikums alleine registriert werden oder gemeinsam mit entsprechenden Aussagen/Stimmabgaben eines weiteren Teils des Bildschirmpublikums, das andere Übertragungsmedien wie USTM-Handy, WAP-Handy, GSM-Handy oder sogar konventionelles Telefon zur Aussage/Stimmabgabe in Anspruch nimmt. In jedem Fall kann das eingehende sich aufaddierende und verändernde Ergebnis vorzugsweise digital oder als Balkendiagramm im Bild der laufenden Live-Fernsehsendung dargestellt werden.

Sofern die Stimmabgabe, Abgabe einer Meinung, Abgabe einer Wettaussage mit einer Gewinnausspielung verbunden ist, ist es erforderlich, die Daten zur Personenidentifizierung zumindest zeitweise beim Fernsehsender in einem mit Webserver ausgestatteten Rechner zu speichern.

Es ist ebenfalls möglich, daß die Live-Fernsehsendung während und/oder nach einer politischen Wahl/Volksbefragung durchgeführt wird, wobei das Bildschirmpublikum eine Schnittmenge mit der Wahlbevölkerung bildet. Hierbei kann eine on-line- Stimmabgabe durch zumindest einen Teil der Wahlbevölkerung, die auch über das Bildschirmpublikum hinausgehen kann, während der Live-Fernsehsendung erfolgen, wobei die abstimmenden Personen durch eine vorher vorgegebenen PIN-Nummer identifiziert sind, die nach der Stimmabgabe gelöscht werden muß, während das reine Abstimmergebnis in einem unter amtlicher Kontrolle stehenden Rechner gespeichert wird. Hierbei muß die Live-Einspielung der Camcorderaufnahme bzw. der Digitalbildaufnahme von der Stimmabgabe inhaltlich entkoppelt werden, so daß nur eine Nachwahlaussage bzw. eine politische Kommentierung zur durchgeführten Wahl/Volksbefragung als Inhalt der Bildeinspielung in Betracht kommt. Ein gleichzeitiges Anzeigen des sich veränderten Wahlergebnisses verbietet sich aus gesetzlichen Gründen bei dieser Form der Live-Fernsehsendung.

Bei allen anderen Formen von Abstimmungen, die das Wahlgeheimnis nicht einzuhalten haben, ist es nach einem besonderen Aspekt der Erfindung möglich, Abstimmungen per Bildeinspielung gruppenweise vornehmen zu lassen, wobei die Auszählung der in einem Bild dargestellten Personen/Köpfe bzw. der in einem Bild für eine Stimmabgabe gehobenen Hände durch automatische Bilderfassungs- und Auswertungssysteme erfolgen kann, die dann entsprechende Zählergebnisse liefern und speichern. Bezüglich weiterer Abwandlungen des Verfahrens wird auf die Patentansprüche verwiesen.

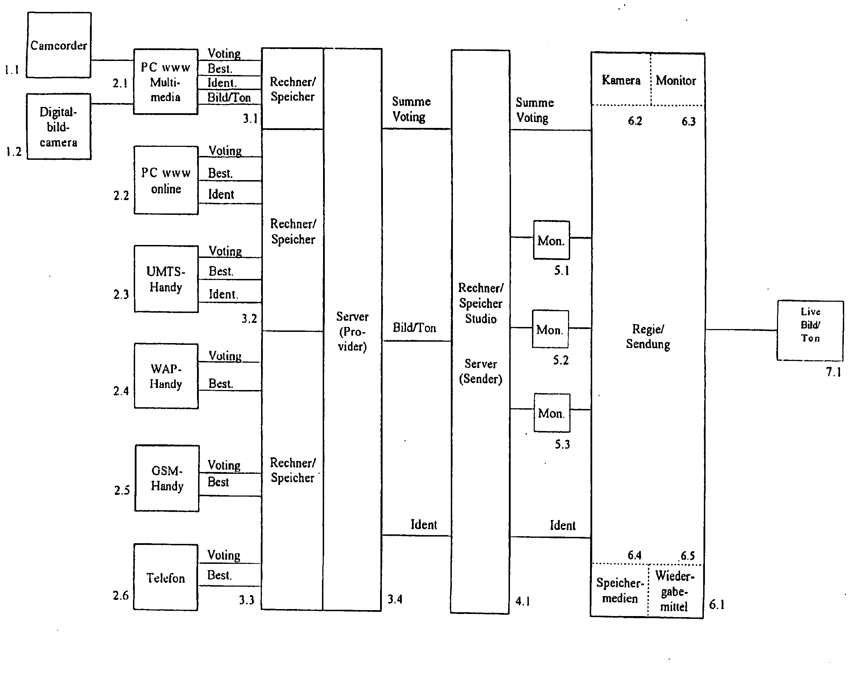

Ein Prinzipbild, in dem die beim erfindungsgemäßen Verfahren eingesetzten Mittel dargestellt sind, ergibt sich aus der Zeichnung. Diese wird spaltenweise von links nach rechts erläutert. Links sind in einem ersten Block die Bildaufnahmemedien Camcorder 1.1 und Digitalbildkamera 1.2 dargestellt. Diese sind wahlweise mit einem Multimedia-PC 2.1 mit Internetanschluß verbunden. Dieser sendet/empfängt über vier symbolische Verbindungen die Informationen Voting (Abstimmung), Bestätigung, Identifizierung und Bild/Ton auf einen ersten Rechner/Speicher 3.1 (Server). Weiterhin sind ein PC 2.2 bzw. ein USTM-Endgerät 2.3 gezeigt, die über drei Leitungen die folgenden Informationen Voting, Bestätigung, Identifizierung auf einen Rechner/Speicher 3.2 (Server) übertragen/empfangen. Schließlich sind als weitere Endgeräte ein WAP-Handy 2.4, ein GSM-Handy 2.5 und ein Telefon 2.6 dargestellt, die über jeweils zwei Leitungen die Daten Voting und Bestätigung auf einen Rechner/Speicher 3.3 (Server) übertragen/empfangen, wobei die Bestätigung in einer Verbindungsunterbrechung liegen kann. In einer Rechnereinheit 3.4 werden Auswertungen vorgenommen, wobei durch drei Leitungsverbindungen dargestellt Summe Voting, Bild/Tondaten und Identifizierungsdaten auf einen Rechner/Speicher 4.1 (Server) eines Fernsehsenders übertragen werden. An diesen sind zur Durchführung eines Castings/einer Bildauswahl eine Mehrzahl von Monitoren 5.1 bis 5.3 angeschlossen, die dem Casting/der Bildauswahl durch einen Regisseur dienen. Diesem Block von Monitoren nachgeschaltet ist ein Block Regie/Sender 6.1, in dem das Live-Bild 7.1 für die Sendung erzeugt wird. In diesem funktionell und örtlich zu verstehenden Block 6.1 sind Funktionsblöcke für Studiokameras 6.2 und Monitore 6.3 und Bild/Ton-Speichermedien 6.4 und Abspielmittel 6.5 eingezeichnet, die wesentliche Teile der Live-Fernsehsendung produzieren bzw. bereitstellen.

## Patentansprüche

1. Einrichtung zur Durchführung von Live-Fernsehsendungen - insbesondere solchen, die unter Leitung eines Moderators stehen und die ein Vor-Ort-Publikum einschließen - bei der an einem Aufnahmeort elektronische Aufnahmemittel zur Erzeugung von Bild- und Tonaufnahmen von Live-Ereignissen eingerichtet sind, die mit einem Fernseh-Sender verbunden sind, der über Mittel zur Durchführung einer Live-Fernsehsendung für ein Bildschirmpublikum verfügt, wobei die am Aufnahmeort von den Aufnahmemitteln erzeugten Aufnahmen zumindest teilweise den Inhalt der Übertragung einer Live-Fernsehsendung bilden, wobei an weiteren Standorten weitere elektronische Aufnahmemittel zur Erzeugung von Bild- und Tonaufnahmen aufgestellt sind,
**dadurch gekennzeichnet,**
**daß** als weitere elektronische Aufnahmemittel Mobiltelefone mit digitaler Kamera vorgesehen sind, über Internetstrukturen mit einem Rechner/Speicher im Sender verbunden sind und
**daß** Bildauswahl- und -einspielmittel vorgesehen sind, mit denen die an den weiteren Standorten von den weiteren Aufnahmemitteln erzeugten Aufnahmen in den Ablauf der unter Verwendung der von den Aufnahmemitteln am Aufnahmeort erzeugten Aufnahmen erfolgenden Übertragung der Live-Fernsehsendung einspielbar sind, und die Mobiltelefone daß zur Herstellung von interaktiven Sprechverbindungen zwischen dem Aufnahmeort und den weiteren Standorten über die Internetstrukturen vorgesehen sind.

2. Einrichtung nach Anspruch 1,
**dadurch gekennzeichnet,**
**daß** die Bildauswahl- und -einspielmittel Eingabemittel umfassen, die von einem Benutzer/Regisseur steuerbar sind.

3. Einrichtung nach Anspruch 1 oder 2,
**dadurch gekennzeichnet,**
**daß** die Bildauswahl- und -einspielmittel einen Zufallsgenerator umfassen, der zur Auswahl unter den weiteren Aufnahmen dient.

4. Einrichtung nach einem der Ansprüche 1 bis 3,
**dadurch gekennzeichnet,**
**daß** die weiteren Aufnahmemittel jeweils mit einem multimediafähigen und internetfähigen Computer verbunden sind, der in die Internet-Strukturen integriert ist.

5. Einrichtung nach einem der Ansprüche 1 bis 4,
**dadurch gekennzeichnet,**
**daß** die weiteren Aufnahmemittel mit einem Rechner/Speicher (Server) eines Providers innerhalb der Internetstrukturen verbunden sind.

6. Einrichtung nach einem der Ansprüche 1 bis 5,
**dadurch gekennzeichnet,**
**daß** an einen Rechner/Speicher (Server) des Senders eine Mehrzahl von Monitoren angeschlossen ist.

7. Einrichtung nach einem der Ansprüche 1 bis 6,
**dadurch gekennzeichnet,**
**daß** im Sender Datenspeichermittel und Wiedergabemittel für Bild- und Tonaufzeichnungen vorgesehen sind, die mit den Bildauswahl- und -einspielmitteln verbunden sind.

8. Einrichtung nach einem der Ansprüche 1 bis 7,
**dadurch gekennzeichnet,**
**daß** auf einem Provider innerhalb der Internetstrukturen eine Website des Senders eingerichtet ist, auf der der Ablauf der Live-Fernsehsendung darstellbar ist.

9. Einrichtung nach einem der Ansprüche 1 bis 8,
**dadurch gekennzeichnet,**
**daß** auf einem Provider innerhalb der Internetstrukturen eine Website des Senders eingerichtet ist, die zur Durchführung von Abstimmungsvorgängen/Meinungsäußerungen/Wettaussagen eingerichtet ist, die unmittelbar in die bertragung der Live-Fernsehsendung einspielbar sind.

10. Einrichtung nach einem der Ansprüche 1 bis 9,
**dadurch gekennzeichnet,**
**daß** an weiteren Standorten eine Mehrzahl von digitalen Endgeräten vorgesehen sind, die für digitalisierte Abstimmungen/Meinungsäußerungen/Wettaussagen eingerichtet sind, und die über die Internetstrukturen mit einem Rechner/Speicher (Server) im Sender verbunden sind, und daß Auswertemittel im Rechner/Speicher (Server) vorgesehen sind, die die Abstimmungs-/Meinungsäußerungs-/Wettprozeduren auswerten und in alphanumerische oder graphische Bilddarstellungen umsetzen, die unmittelbar in die Übertragung der Live-Fernsehsendung einspielbar sind.

11. Verfahren zur Durchführung von Live-Fernsehsendungen - insbesondere solchen, die unter Leitung eines Moderators stehen und die ein an einem Aufnahmeort anwesendes Vor-Ort-Publikum einschließen - bei dem an einem eingerichteten Aufnahmeort Bild- und Tonaufnahmen von Live-Ereignissen mit elektronischen Aufnahmemitteln aufgenommen werden, die zu einem Fernseh-Sender übertragen werden, der über Mittel zur Durchführung einer Live-Fernsehsendung für ein Bildschirmpublikum verfügt, und zumindest teilweise den Inhalt der Übertragung der Live-Fernsehsendung bilden, und während des Aufnehmens der Live-Ereignisse am Aufnahmeort an weiteren Standorten digitale Live-Bild- und Tonaufnahmen mit weiteren elektronischen Aufnahmemitteln erzeugt werden,
**dadurch gekennzeichnet,**
**daß** die weiteren digitalen Live-Bild- und Tonaufnahmen mittels Mobiltelefonen mit digitaler Kamera über Internetstrukturen zu dem Sender übertragen und in den Ablauf der Übertragung (Live-Streaming), der Live-Fernsehsendung eingespielt werden, und **daß** zwischen dem Aufnahmeort und den weiteren Standorten interaktive Sprechverbindungen mittels der Mobiltelefone über die Internetstrukturen hergestellt werden.

12. Verfahren nach Ansprüch 11,
**dadurch gekennzeichnet,**
**daß** während der Übertragung der Live-Fernsehsendung zeitweise Bild- und Tonaufzeichnungen von Datenspeichermitteln im Sender in die Live-Fernsehsendung eingespielt werden.

13. Verfahren nach einem der Ansprüche 11 oder 12,
**dadurch gekennzeichnet,**
**daß** die Live-Fernsehsendung auch oder ausschließlich über Internetstrukturen auf einer Website des Senders dargestellt wird.

14. Verfahren nach einem der Ansprüche 11 bis 13,
**dadurch gekennzeichnet,**
**daß** während der Live-Fernsehsendung on-line-Abstimmungen /Meinungsäußerungen/Wettaussagen erfolgen, wobei die Datenübertragung für die Abstimmungen/Meinungsäußerungen/Wettaussagen zumindest teilweise über die Internetstrukturen erfolgt.

15. Verfahren nach Anspruch 14,
**dadurch gekennzeichnet,**
**daß** die abstimmenden Personen durch eine vorher vergebene PIN-Nummer identifiziert sind, die nach der Stimmabgabe gelöscht wird.

16. Verfahren nach einem der Ansprüche 11 bis 15,
**dadurch gekennzeichnet,**
**daß** die abstimmenden/ihre Meinung äußernden/wettenden Personen insbesondere anhand ihrer Internetadresse identifiziert und registriert werden und ihre Daten nach der Stimmabgabe/Meinungsäußerung/Wettaussage gespeichert werden.

17. Verfahren nach einem der Ansprüche 11 bis 16,
**dadurch gekennzeichnet,**
**daß** Einzelpersonen und/oder Personengruppen von Abstimmenden, Meinungsäußernden oder Wettern während der Live-Fernsehsendung mit den weiteren Aufnahmemitteln aufgenommen, übertragen und in die Live-Fernsehsendung eingespielt werden.

18. Verfahren nach einem der Ansprüche 11 bis 17,
**dadurch gekennzeichnet,**
**daß** während der Live-Fernsehübertragung der Zählstand der laufenden Abstimmung/Meinungsäußerung/Wette mit seinen Änderungen in der laufenden Live-Fernsehsendung im Bild digital oder analog dargestellt wird.

## Claims

1. A system for executing live television programmes, more particularly those which are under the direction of a presenter and which include an on-location audience, wherein a recording location is provided with electronic recording means for producing picture and sound recordings of live events, which electronic recording means are connected with a television transmitter which is provided with means for executing a live television programme for a screen audience, wherein the recordings made at the recording location by the recording means at least partially constitute the contents of the transmission of a live television programme, wherein, at further sites, there have been erected further electronic recording means for making picture and sound recordings,
**characterised in**
**that** the further electronic recording means are mobile telephones with a digital camera which, via internet structures, are connected to a computer/memory in the transmitter and
**that** there are provided picture selection and mixing means with the help of which the recordings made in the further sites by the further recording means can be mixed with the sequence of the transmission of the live television programme, using the recordings produced by the recordings means on location and
**that** the mobile telephones are provided for putting into effect interactive speaking connections between the recording location and the further sites via the internet structures.

2. A system according to claim 1,
**characterised in**
**that** the picture selection and mixing means comprise input means which can be controlled by a user/producer/director.

3. A system according to claim 1 or 2,
**characterised in**
**that** the picture selection and mixing means comprise a random generator which serves to make a selection of the further recordings.

4. A system according to any one of claims 1 to 3,
**characterised in**
**that** the further recording means are each connected to a multi-media-capable and internet-capable computer which is integrated into the internet structures.

5. A system according to any one of claims 1 to 4,
**characterised in**
**that** the further recording means are connected to a computer/memory (server) of a provider within the internet structures.

6. A system according to any one of claims 1 to 5,
**characterised in**
**that** a plurality of monitors is connected to a computer/memory (server) of the transmitter.

7. A system according to any one of claims 1 to 6,
**characterised in**
**that** in the transmitter, there are provided data storing means and data reproducing means for picture and sound recordings, which means re connected to the picture selection and mixing means.

8. A system according to any one of claims 1 to 7,
**characterised in**
**that** a provider within the internet structures has been provided with a website of the transmitter, on which website the sequence of the live television programme can be shown.

9. A system according to any one of claims 1 to 8,
**characterised in**
**that** a provider within the internet structures is provided with a website of the transmitter, which website is equipped to execute voting procedures/opinion expressing procedures/betting procedures which can be mixed directly with the transmission of the live television programme.

10. A system according to any one of claims 1 to 9,
**characterised in**
**that** at further sites, there has been provided a plurality of digital end appliances which are equipped for digitalised voting/opinion expressing/betting procedures and which, via internet structures, are connected to a computer/memory (server) in the transmitter, and
**that** the computer/memory (server) is provided with evaluation means which evaluate the voting/opinion expressing/betting procedures and convert same into alpha-numerical or graphic picture illustrations which can be blended directly into the transmission of the live television programme.

11. A method of executing live television programmes, more particularly those which are under the direction of a presenter and which include an on-location audience present in a recording location, wherein, in a prepared recording location, picture and sound recordings of live events are made by electronic recording means which are transmitted to a television transmitter provided with means for executing a live television programme for a screen audience and which at least partially constitute the contents of the transmission of the live television programme, and that, during the recording to the live events in the recording location, further sites are used to produce digital live picture and sound recordings with the help of further electronic recording means,
**characterised in**
**that** the further digital live picture and sound recordings made by means of mobile telephones with a digital camera are transmitted via internet structures to the transmitter and incorporated into the sequence of the transmission (live streaming) of the live television programme, and
**that**, between the recording location and the further sites, there are provided interactive speaking connections by means of mobile telephones via the internet structures.

12. A method according to claim 11,
**characterised in**
**that** during the transmission of the live television programme, picture and sound recordings of data storage means in the transmitter are mixed with the live television programme.

13. A method according to any one of claims 11 or 12,
**characterised in**
the live television programme is also or exclusively shown via internet structures on a website of the transmitter.

14. A method according to any one of claims 11 to 13,
**characterised in**
**that** during the live television programme there takes place on-line voting/ expressing of opinions/betting, wherein the transmission of data for the voting/opinion expressing/ betting procedures takes place at least partially via the internet structures.

15. A method according to claim 14,
**characterised in**
**that** the voting persons are identified by a previously allocated PIN-number which is deleted after completion of the voting procedure.

16. A method according to any one of claims 11 to 15,
**characterised in**
**that** the voting/opinion expressing/betting persons are identified and registered more particularly by their internet address and that their data are stored after voting/opinion expressing/betting has taken place.

17. A method according to any one of claims 11 to 16,
**characterised in**
**that** during the live television programme, individual persons and/or groups of people voting, expressing their opinion or betting are filmed, transmitted and mixed with the live television programme by the further recording means.

18. A method according to any one of claims 11 to 17,
**characterised in**
**that** during the live television transmission, the number of votes counted during the voting/opinion expressing/betting procedure and the changes in same are represented in the on-going live television programme in the picture either in a digital or analogue way.

## Revendications

1. Dispositif pour la réalisation d'émissions télévisuelles en direct, en particulier celles qui sont animées par un présentateur et qui comprennent du public sur place, pour lequel, sur un lieu d'enregistrement, des moyens électroniques d'enregistrement pour la production d'enregistrement d'images et de sons des évènements en direct, lesquels sont installés et connectés à un émetteur de télévision, qui possède de moyens pour la réalisation d'une émission télévisuelle en direct pour des téléspectateurs, les enregistrements produits par les moyens d'enregistrement sur le lieu d'enregistrement constituant au moins en partie le contenu de la transmission d'une émission télévisuelle en direct, dans d'autres lieux, plusieurs terminaux numériques étant prévus pour la production d'enregistrement d'images et de sons,
**caractérisé en ce que**,
des téléphones mobiles équipés de caméra numériques sont prévus comme moyens d'enregistrement supplémentaires, qui sont connectés dans l'émetteur avec un ordinateur/un système de sauvegarde par l'intermédiaire de structures Internet et que des moyens de sélection et d'incrustation d'image sont prévus, avec lesquels les enregistrements produits sur les autres lieux d'enregistrement par les autres moyens d'enregistrement, peuvent être incrustés dans le déroulement de la transmission de l'émission télévisuelle en direct, résultant de l'utilisation des enregistrements produits par les moyens d'enregistrement sur le lieu d'enregistrement, et les téléphones mobiles qui sont prévus pour la production de communications vocales interactives entre le lieu d'enregistrement et les autres lieux par l'intermédiaire des structures Internet.

2. Dispositif selon la revendication 1,
**caractérisé en ce que**
les moyens de sélection et d'incrustation d'image comprennent des moyens de saisie qui sont commandables par un utilisateur/régisseur.

3. Dispositif selon la revendication 1 ou 2,
**caractérisé en ce que**
les moyens de sélection et d'incrustation d'image comprennent un générateur de nombres aléatoires qui sert à la sélection parmi les autres enregistrements.

4. Dispositif selon la revendication 1 à 3,
**caractérisé en ce que**
les autres moyens d'enregistrement sont respectivement connectés à un ordinateur compatible multimédia et compatible Internet, lequel est intégré dans les structures Internet.

5. Dispositif selon l'une des revendications 1 à 4,
**caractérisé en ce que**
les autres moyens d'enregistrement sont connectés à un ordinateur/un système de sauvegarde (serveur) d'un fournisseur d'accès au sein des structures Internet.

6. Dispositif selon l'une des revendications 1 à 5,
**caractérisé en ce que**
plusieurs moniteurs sont raccordés à un ordinateur/un système de sauvegarde (serveur) de l'émetteur.

7. Dispositif selon l'une des revendications 1 à 6,
**caractérisé en ce que**
des moyens de sauvegarde des données et de restitution pour les enregistrements d'images et de sons sont prévus, lesquels sont connectés avec des moyens de sélection et d'incrustation d'image.

8. Dispositif selon l'une des revendications 1 à 7,
**caractérisé en ce qu'**un
site Internet de l'émetteur est installé chez un fournisseur d'accès au sein des structures Internet, sur lequel il est possible de représenter l'émission télévisuelle en direct.

9. Dispositif selon l'une des revendications 1 à 8,
**caractérisé en ce qu'**un
site Internet de l'émetteur est installé chez un fournisseur d'accès au sein des structures Internet, lequel est conçu pour réaliser des votes/suffrages/déclarations concernant des paris, lesquels peuvent être incrustés immédiatement dans l'émission télévisuelle en direct.

10. Dispositif selon l'une des revendications 1 à 9,
**caractérisé en ce qu'**en
dans d'autres lieux, plusieurs terminaux numériques sont prévus, lesquels sont installés pour des votes/suffrages/déclarations concernant des paris numérisés, et qui sont connectés avec un ordinateur/un système de sauvegarde (serveur) dans l'émetteur par l'intermédiaire de structures Internet et que des moyens d'évaluation sont prévus dans l'ordinateur/la mémoire (serveur) dans l'émetteur, lesquels évaluent les procédures de vote/de suffrage/de pari et les convertissent en représentations alphanumériques ou graphiques, lesquelles peuvent être immédiatement incrustées dans la transmission de l'émission télévisuelle en direct.

11. Procédé pour la réalisation d'émissions télévisuelles en direct, en particulier celles qui sont animées par un présentateur et qui comprennent du public sur place, sur un lieu d'enregistrement, pour lequel, sur un lieu d'enregistrement aménagé, des images et des sons des évènements en direct sont enregistrés avec des moyens électroniques, lesquels sont transmis à un émetteur de télévision, qui possède des moyens de réalisation d'une émission télévisuelle en direct par l'intermédiaire de téléspectateurs et constituant au moins en partie le contenu de la transmission d'une émission télévisuelle en direct et que pendant l'enregistrement des évènements en direct sur le lieu d'enregistrement, sur d'autres lieux d'enregistrement, des images numériques en direct et des sons sont enregistrés avec d'autres moyens d'enregistrement électroniques,
**caractérisé en ce que**
les autres enregistrements numériques en direct d'images et de sons, au moyen de téléphones mobiles équipés de caméra numérique, sont transmis à l'émetteur par l'intermédiaire des structures Internet et sont incrustés au cours de la transmission (Live-Streaming) de l'émission télévisuelle en direct, et qu'entre le lieu d'enregistrement et les autres lieux des communications vocales interactives sont produites par l'intermédiaire des téléphones mobiles via des structures Internet.

12. Procédé selon la revendication 11,
**caractérisé en ce que**
pendant la transmission de l'émission télévisuelle en direct, momentanément, des enregistrements d'images et de sons de moyens de sauvegarde des données dans l'émetteur sont incrustés dans l'émission télévisuelle en direct.

13. Procédé selon la revendication 11 ou 12,
**caractérisé en ce que**
l'émission télévisuelle en direct est également ou exclusivement représentée par l'intermédiaire des structures Internet sur un site Web de l'émetteur.

14. Procédé selon l'une des revendications 11 à 13,
**caractérisé en ce que**
pendant la transmission des émissions télévisuelles en direct, des votes/suffrages/déclarations sur les paris en ligne sont réalisés, la transmission des données pour les votes/suffrages/déclarations sur les paris ayant lieu au moins en partie par l'intermédiaire des structures Internet.

15. Procédé selon la revendication 14,
**caractérisé en ce que**,
les individus qui votent sont identifiés via un numéro PIN attribué préalablement, lequel est supprimé à l'issue du vote.

16. Procédé selon l'une des revendications 11 à 15,
**caractérisé en ce que**,
les individus votant/exprimant leur suffrage/pariant sont identifiés en particulier par l'intermédiaire de leur adresse Internet, et les données les concernant sont sauvegardées en fonction du vote/de suffrage/du pari.

17. Procédé selon l'une des revendications 11 à 16,
**caractérisé en ce que**,
des individus votant/exprimant leur suffrage/pariant sont enregistrés par les autres moyens d'enregistrement pendant l'émission télévisuelle en direct, transmis et incrustés dans l'émission télévisuelle en direct.

18. Procédé selon l'une des revendications 11 à 17,
**caractérisé en ce que**
pendant la transmission de l'émission télévisuelle en direct, le décompte des vote/suffrage/pari en cours avec ses modifications est représenté de façon numérique ou analogique sur l'image de la transmission télévisuelle en direct.
